# EUROPÄISCHE PATENTSCHRIFT

(11) **EP 3 695 041 B1**
(45) Veröffentlichungstag und Bekanntmachung des Hinweises auf die Patenterteilung: **05.10.2022**
(21) Anmeldenummer: 18739851.6
(22) Anmeldetag: 12.07.2018
(51) Int. Cl.: D05B 69/12, G01D 5/20

(54) **NÄHMASCHINENANTRIEB**
SEWING MACHINE DRIVE
ENTRAINEMENT DE MACHINE À COUDRE

(30) Priorität: 13.10.2017 DE 102017218354
(43) Veröffentlichungstag der Anmeldung: 19.08.2020
(73) Patentinhaber: Frankl & Kirchner GmbH & Co KG Fabrik für Elektromotoren u. elektrische Apparate, 68723 Schwetzingen (DE)
(72) Erfinder: SINN, Wolfgang, 69231 Rauenberg (DE)
(74) Vertreter: Rau, Schneck & Hübner Patentanwälte Rechtsanwälte PartGmbB
(86) Internationale Anmeldenummer: PCT/EP2018/068860
(87) Internationale Veröffentlichungsnummer: WO 2019/072427

(56) Entgegenhaltungen:
- DE-A1-102015 226 666
- DE-T1- 3 990 206
- JP-A- 2014 161 373
- US-A- 4 551 676
- US-A1- 2015 091 554
- US-A1- 2016 146 630

## Beschreibung

Die vorliegende Patentanmeldung nimmt die Priorität der deutschen Patentanmeldung DE 10 2017 218 354.3 in Anspruch.

Die Erfindung betrifft einen Nähmaschinenantrieb. Ferner betrifft die Erfindung eine Nähmaschine mit einem erfindungsgemäßen Nähmaschinenantrieb.

Ein Nähmaschinenantrieb ist insbesondere aus der DE 197 14 520 A1 und der US 5,860,377 A bekannt.

Es ist daher Aufgabe der vorliegenden Erfindung, den bekannten Stand der Technik derart zu verbessern, dass ein Nähmaschinenantrieb einfach und kostengünstig herstellbar sowie gleichzeitig funktionssicher handhabbar ist. Diese Aufgabe wird gelöst durch einen Nähmaschinenantrieb gemäß den Merkmalen des Anspruchs 1.

Der erfindungsgemäße Nähmaschinenantrieb hat eine Referenzspur, welche einen Monopol umfasst. Unter dem Begriff Monopol wird eine Magnetisierung der Referenzspur verstanden, bei der die magnetische Flussdichte eines Pols betragsmäßig einen viel größeren Spitzenwert hat als die magnetische Flussdichte des dann vernachlässigbaren Gegenpols. Ein Verhältnis zwischen den Spitzenwerten der Flussdichten zwischen dem praktisch ausschließlich wirkenden Pol und dem vernachlässigbaren Gegenpol ist mindestens größer als 5. Bei dem erfindungsgemäßen Nähmaschinenantrieb weist der Monopol in einem ersten Bereich eine magnetische Flussdichte B₁ auf, welche um mindestens einen Faktor 10 größer ist, als eine magnetische Flussdichte B₂ in mindestens einem zweiten Bereich.

Durch die Gestaltung der Referenzspur mit mindestens einem Monopol ist der konstruktive Aufwand gegenüber den aus dem Stand der Technik bekannten Systemen reduziert. Die Ausbildung eines Monopols kann Fehler und Ungenauigkeiten bei der Auswertung der erfassbaren Signale reduzieren. Zudem sind aufgrund der Ausgestaltung der Referenzspur mit einem Monopol größere Fertigungstoleranzen bei der Magnetisierung möglich, was eine einfachere Herstellung des erfindungsgemäßen Encodersystems zur Folge hat.

Die Referenzspur kann auf einer magnetischen, insbesondere ferritischen Scheibe ausgebildet sein, wobei die Scheibe drehfest mit einer Welle, insbesondere mit einer Motorwelle, verbunden sein kann. Der Monopol der Referenzspur umfasst lediglich einen Teilabschnitt in Umfangsrichtung der Scheibe. Neben der Referenzspur umfasst die Scheibe zusätzlich eine Inkrementalspur, welche vollumfänglich auf der Scheibe ausgeführt ist. Durch die Ausgestaltung der Referenzspur mit einem Monopol wird die gegenseitige magnetische Beeinflussung der Inkrementalspur und der Referenzspur gegenüber den herkömmlichen Encodersystemen reduziert. Folglich ist eine erhöhte Funktionssicherheit des Encodersystems gewährleistet. Des Weiteren sind insbesondere kompaktere beziehungsweise kleinere Ausgestaltungen des erfindungsgemäßen Encodersystems denkbar, da die Inkrementalspur sowie die Referenzspur näher beieinanderliegen können, ohne sich gegenseitig zu beeinflussen.

Vorteilhafterweise sind die Inkrementalspur und die Referenzspur kreisförmig und koaxial zueinander ausgebildet. Insbesondere weist die Referenzspur einen kleineren Radius als die Inkrementalspur auf, allerdings ist eine gegenteilige Ausbildung ebenfalls denkbar. Gleichzeitig können die Spuren koaxial mit der Welle ausgebildet sein. Es ist ebenfalls denkbar die Spuren exzentrisch zueinander sowie zur Welle und/oder eckig, insbesondere mehreckig, zum Beispiel fünf- oder sechseckig auszubilden.

Die Inkrementalspur sowie die Referenzspur können an einer Oberseite und/oder an einer Unterseite der Scheibe und/oder an einer äußeren Mantelwand der Scheibe angebracht sein.

Es ist ebenfalls denkbar, dass neben der Referenzspur und der Inkrementalspur weitere Spuren zum Einsatz kommen. Die weiteren Spuren sind vorteilhafterweise als Teilabschnitt längs eines Umfangs an der Scheibe ausgebildet und an einer, zur Inkrementalspur und zur Referenzspur, unterschiedlichen Position auf der Scheibe angebracht. Vorteilhafterweise weisen die weiteren Spuren Monopole auf.

Die erfassbaren Signale der Spuren können unterschiedlichen Signalauswerteeinheiten zugeführt werden. Insbesondere werden zur Auswertung der erfassbaren Signale magnetoresistive Sensoren, vorteilhafterweise Hall-Sensoren eingesetzt.

Ein Nähmaschinenantrieb mit einem Encodersystem ermöglicht eine optimierte Ansteuerbarkeit des Antriebs, insbesondere des Nähmaschinenmotors, und kann somit die Handhabung einer Nähmaschine erleichtern.

Ein Encodersystem ist bekannt aus der DE 10 2015 226 666 A2. Weitere Encodersysteme sind bekannt aus der US 2016/0146630 A1, der DE 39 90 206 T1, der DE 10 2011 053 309 A1, der US 2015/0091554 A1, der US 4,551,676 A und der JP 2014 161373 A.

Ein Nähmaschinenantrieb nach Anspruch 2 ermöglicht es, Fehler und Ungenauigkeiten bei der Auswertung der erfassbaren Signale zu reduzieren. Ein insbesondere magnetfeldinduziertes Übersprechen zwischen der Inkrementalspur und der Referenzspur ist vermieden. Gemäß einer besonders vorteilhaften Ausgestaltung weist die Scheibe zwischen der Inkrementalspur sowie der Referenzspur eine Vertiefung auf, welche vollumfänglich umlaufend ausgebildet ist. Alternativ kann die Vertiefung auch als Ringabschnitt auf der Scheibe ausgeführt sein. Vorteilhafterweise ist die Vertiefung an dem Abschnitt auf der Scheibe ausgebildet, an welchem die Referenzspur ausgebildet ist. Hierbei kann sich die Abschnitts-Vertiefung an der Scheibe um dieselbe Umfangserstreckung wie die Referenzspur erstrecken. Die Vertiefung kann zum Erzeugen eines Luftspalts zwischen der Inkrementalspur sowie der Referenzspur dienen, wodurch einer unerwünschten Beeinflussung der beiden Spuren entgegengewirkt wird.

Ein Nähmaschinenantrieb gemäß den Ansprüchen 3 und 4 ermöglicht eine sichere und störungsfreie Ermittlung der Referenzspur durch die entsprechende Signalauswerteeinheit. Insbesondere ist die magnetische Feldstärke beziehungsweise die magnetische Flussdichte in dem ersten Bereich um einen Faktor 15 bis 25, vorteilhafterweise um einen Faktor 20, größer als die magnetische Feldstärke beziehungsweise die magnetische Flussdichte im zweiten Bereich.

Ein Nähmaschinenantrieb nach Anspruch 5 ermöglicht eine sichere und störungsfreie Ermittlung der Referenzspur durch die entsprechende Signalauswerteeinheit. Insbesondere kann sich der Monopol über den Umfang von zwei oder mehr Polelementen der Inkrementalspur erstrecken. Vorteilhafterweise erstreckt sich der Monopol über den Umfang von einem Polelement der Inkrementalspur.

Ein Nähmaschinenantrieb nach Anspruch 6 ermöglicht eine Drehrichtungserkennung. Die Anzahl der Monopole kann dabei variieren. Insbesondere sind an der Referenzspur zwei oder mehr Monopole, vorteilhafterweise vier Monopole angeordnet, allerdings sind auch mehr Monopole denkbar. Vorteilhafterweise sind die Monopole, unabhängig von ihrer Anzahl, in Umfangsrichtung der Referenzspur gleich beabstandet. Zudem können die Monopole unterschiedliche Umfangserstreckungen, insbesondere im Hinblick auf den Umfang der Polelemente der Inkrementalspur, aufweisen. Bei einer besonders vorteilhaften Ausgestaltung der Referenzspur erhöht sich, ausgehend von einem ersten Monopol, die Umfangserstreckung des nächstfolgenden Monopols um die Umfangserstreckung eines weiteren Polelements der Inkrementalspur.

Ein Nähmaschinenantrieb nach Anspruch 7 dient zur Nullpunkt-Referenzierung des Rotors, wodurch die erfassbaren Signale, insbesondere bei einer Mehrzahl von Monopolen auf der Referenzspur, mit der Maschinensteuerung synchonisierbar sind, mit welcher das Encodersystem gekoppelt ist. Insbesondere ist die Maschinensteuerung eine Nähmaschinensteuerung.

Bei einem Nähmaschinenantrieb nach Anspruch 8 erfolgt die Auswertung der erfassbaren Signale über eine Auswerteeinheit mit integriertem Mikrocontroller und Magnetsensoren, wodurch ein besonders kompaktes Encodersystem bereitgestellt wird.

Ein Nähmaschinenantrieb nach Anspruch 9 ermöglicht eine unabhängige Nullpunkt-Referenzierung.

Die Vorteile einer Nähmaschine nach Anspruch 10 entsprechen den Vorteilen, die vorstehend unter Bezugnahme auf den erfindungsgemäßen Nähmaschinenantrieb bereits erläutert wurden.

Ausführungsbeispiele der Erfindung werden nachfolgend anhand der Zeichnung näher erläutert. Es zeigen:
- Fig. 1: perspektivisch eine Encodersystem-Baugruppe zum Anbau an einem Servomotor einer Nähmaschine;
- Fig. 2: eine perspektivische Draufsicht auf die Encodersystem-Baugruppe;
- Fig. 3: eine perspektivische Detailansicht eines magnetischen Encoder-systems gemäß einem ersten Ausführungsbeispiel;
- Fig. 4: eine vergrößerte Darstellung des magnetischen Encodersystems im Bereich des Monopols gemäß der Fig. 3;
- Fig. 5: ein Verlaufsdiagramm der magnetischen Flussdichte B der Referenzspur des magnetischen Encodersystems gemäß der Fig. 3;
- Fig. 6: eine Schnittansicht des magnetischen Encodersystems gemäß Fig. 3;
- Fig. 7: eine perspektivische Detailansicht eines magnetischen Encoder-systems gemäß einem zweiten Ausführungsbeispiel.

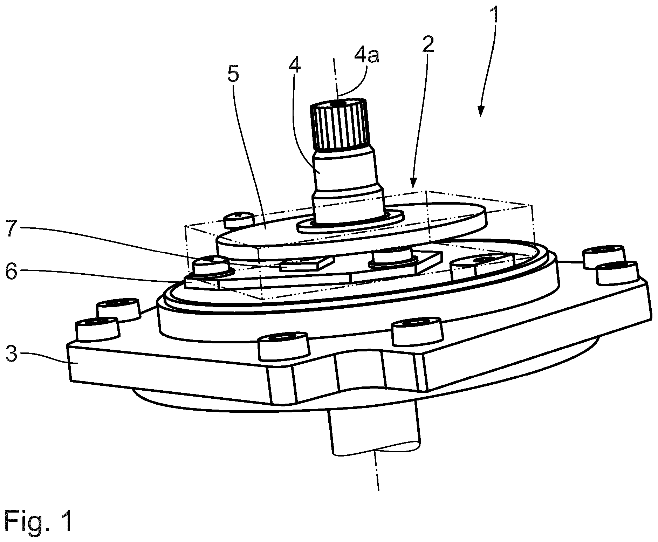

In Folgenden wird unter Bezugnahme auf die Fig. 1 bis 6 ein erstes Ausführungsbeispiel eines magnetischen Encodersystems für eine Nähmaschine in Form eines Servomotors einer Nähmaschine beschrieben.

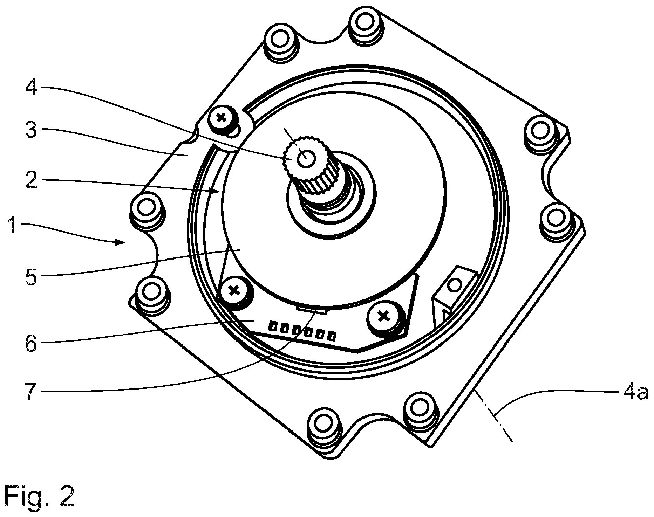

Fig. 1 und Fig. 2 zeigen eine Encodersystem-Baugruppe 1, welche zur Befestigung eines magnetischen Encodersystems 2 an einem Servomotor für eine Nähmaschine dient. Der Servomotor ist aus Gründen der Übersichtlichkeit nicht dargestellt, allerdings ist dessen Lage durch eine Motorwelle 4 mit Wellenachse 4a angedeutet. Zusätzlich zum magnetischen Encodersystem 2 umfasst die Baugruppe 1 einen Anbauflansch 3, mittels welchem das magnetische Encodersystem 2 am Servomotor befestigt ist. Der Anbauflansch 3 sowie das magnetische Encodersystem 2 weisen jeweils ausgehend von ihren Mittelpunkten Öffnungen auf, wodurch diese an der Motorwelle 4 des Servomotors angebracht sind. Die Öffnungen sind kreisförmig ausgebildet.

Das magnetische Encodersystem 2 umfasst eine ringförmige Scheibe 5 aus magnetischem, insbesondere ferritischem Material. Die Scheibe 5 ist dabei drehfest mit der Motorwelle 4 verbunden, wodurch ein Drehen der Motorwelle 4 gleichzeitig eine Drehung der Scheibe 5 zur Folge hat.

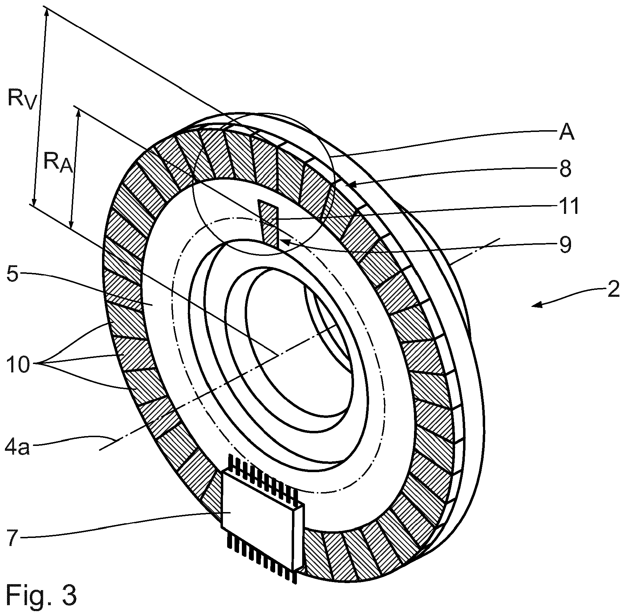

Der Anbauflansch 3 weist an der der Scheibe 5 zugewandten Seite eine Platte 6 auf, mittels welcher eine Auswerteeinheit 7 auf dem Anbauflansch 3 befestigt ist. Die Auswerteeinheit 7 dient zum Auslesen einer auf der Scheibe 5 angebrachten Inkrementalspur 8 sowie einer Referenzspur 9. Der Anbauflansch 3 sowie die darauf befindliche Auswerteeinheit 7 sind ortsfest ausgeführt. Dies bedeutet, dass ein Drehen der Motorwelle 4 keine Drehung des Anbauflansches 3 sowie der Auswerteeinheit 7 zur Folge hat. Aus Figur 3 ist die magnetische Scheibe 5 gemäß dem ersten Ausführungsbeispiel ersichtlich. Die Inkrementalspur 8 sowie die Referenzspur 9 sind kreisförmig ausgebildet und erstrecken sich dabei längs des Umfangs der magnetischen Scheibe 5, wobei die Inkrementalspur 8 vollumfänglich an dem Umfang angebracht ist, während die Referenzspur 9 lediglich einen Teilabschnitt des Umfangs umfasst. Die Inkrementalspur 8 weist sich abwechselnde Polelemente 10 auf. Dagegen umfasst die Referenzspur 9 genau einen Monopol 11. Beide Spuren 8, 9 sind koaxial zueinander sowie koaxial zur Motorwelle 4 angeordnet. Dabei weist die Referenzspur 9 einen Radius R_{A} auf, welcher kleiner ist als ein Radius Rv der Inkrementalspur 8.

Die Auswerteeinheit 7 ist gegenüberliegend der Scheibe 5 über die Platte 6 an dem Anbauflansch 3 montiert und dient zum Auslesen der Inkrementalspur 8 sowie der Referenzspur 9. Dabei ist die Auswerteeinheit 7 derart angeordnet, dass ein erster Magnetsensor die Inkrementalspur 8 und ein weiterer Magnetsensor die Referenzspur 9 erfasst. Die beiden Magnetsensoren sind radial zueinander versetzt angeordnet und aus Gründen der Übersichtlichkeit in den Zeichnungen nicht dargestellt.

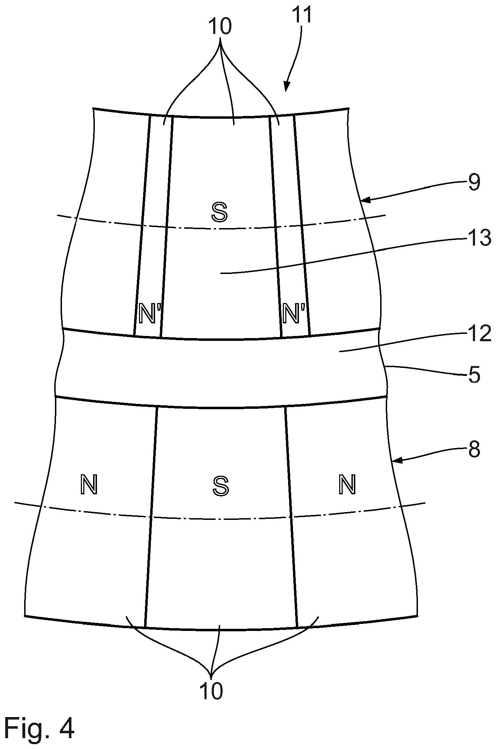

Aus der vergrößerten Darstellung des magnetischen Encodersystems in Figur 4 geht hervor, dass der Monopol 11 des dargestellten Ausführungsbeispiels verstanden werden kann als Aufbau von Polelementen 10 mit einem in der Umfangsrichtung der Referenzspur 9 ausgedehnten Südpol S, der von zwei gegenüberliegenden und sehr schwach ausgeprägten Quasi-Nordpolabschnitten N' begrenzt wird. Die beiden Quasi-Nordpolabschnitte N' stellen einen Gegenpol des Südpols S dar und bilden mit diesem gemeinsam den Monopol 11. Der Aufbau des Monopols 11 kann auch so verstanden werden, dass der Südpol S zusammengesetzt ist aus zwei Südpolabschnitten, zu denen jeweils einer der Quasi-Nordpolabschnitte N' gehört. Im Bereich des Südpols S liegt eine starke magnetische Feldstärke H bzw. magnetische Flussdichte B vor, wohingegen im Bereich der Quasi-Nordpolabschnitte N' nur eine sehr schwache magnetische Feldstärke H bzw. magnetische Flussdichte B vorliegt.

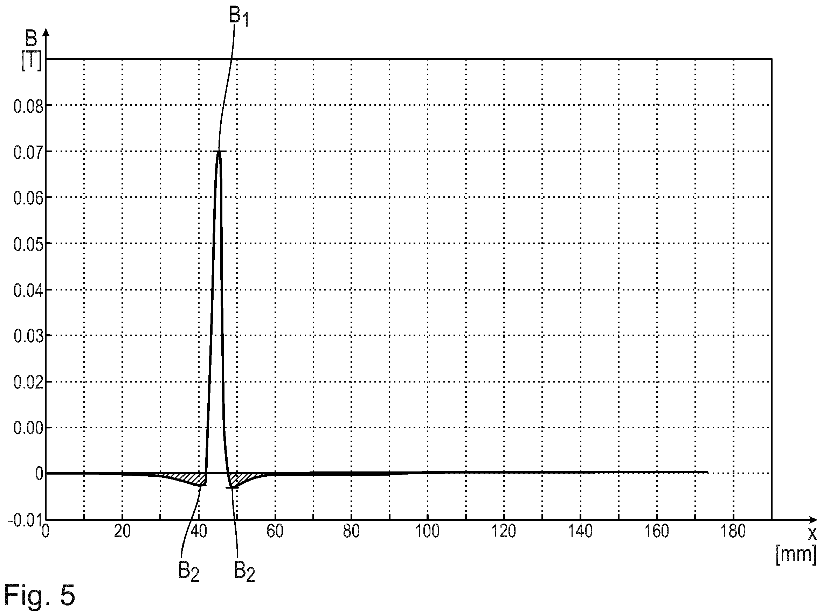

Das in Figur 5 dargestellte Diagramm zeigt einen geglätteten Verlauf der magnetischen Flussdichte B (y-Achse) über die Umfangserstreckung (x-Achse) der Referenzspur 9 gemäß dem ersten Ausführungsbeispiel. In den nicht-magnetisierten Bereichen der Referenzspur 9 jenseits des Monopols 11 ist keine magnetische Flussdichte B messbar. Im Umfangsbereich der Quasi-Nordpolabschnitte N' des Monopols 11 ist ein Maximalbetrag der magnetischen Flussdichte B₂ sehr viel schwächer ausgebildet als ein Maximalbetrag der magnetischen Flussdichte B₁ im Bereich der Umfangserstreckung des Südpols S des Monopols 11. Gemäß dem dargestellten Ausführungsbeispiel ist die magnetische Flussdichte B₁ im Betrag um einen Faktor 23 größer als die jeweiligen magnetischen Flussdichten B₂. Das Verhältnis |B₁|/|B₂| kann größer sein als 10, kann größer sein als 15, kann größer sein als 20 und kann auch noch größer sein als 23.

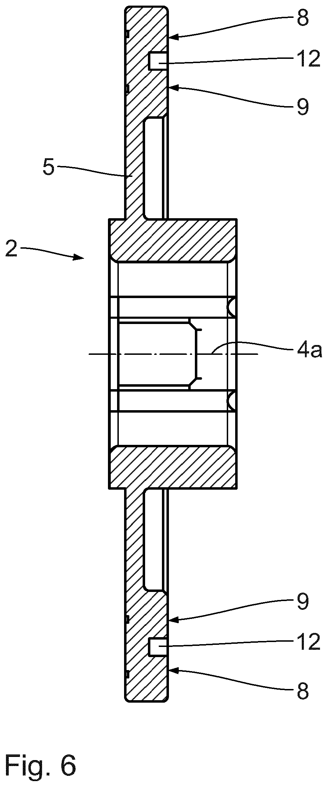

Figur 6 zeigt die Scheibe 5 des magnetischen Encodersystems 2 in einer Schnittansicht. Die Scheibe 5 weist in Umfangsrichtung zwischen der Referenzspur 9 und der Inkrementalspur 8 eine Vertiefung 12 auf. Die Vertiefung 12 ist in dem dargestellten Ausführungsbeispiel als vollumfänglich umlaufend ausgebildet und dient zum Erzeugen eines Luftspalts zwischen der Inkrementalspur 8 sowie der Referenzspur 9. Hierdurch wird einer Beeinflussung der beiden Spuren 8 und 9 untereinander entgegengewirkt. Insbesondere ein magnetfeldinduziertes Übersprechen zwischen den beiden Spuren 8 und 9 ist hierdurch wirkungsvoll verhindert.

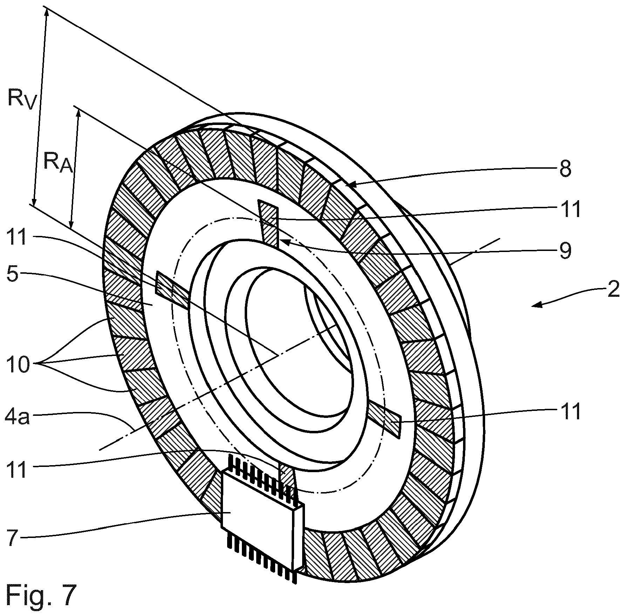

Im Folgenden wir unter Bezugnahme auf die Fig. 7 ein zweites Ausführungsbeispiel des erfindungsgemäßen magnetischen Encodersystems für einen Nähmaschinenantrieb beschrieben. Identische Teile erhalten dieselben Bezugszeichen wie bei dem ersten Ausführungsbeispiel, auf dessen Beschreibung hiermit verwiesen wird. Der zentrale Unterschied gegenüber dem ersten Ausführungsbeispiel besteht darin, dass auf der Referenzspur 9 in Umfangsrichtung eine Mehrzahl von Monopolen 11 ausgebildet ist. Die Monopole 11 sind dabei im 90°-Winkel zueinander versetzt angeordnet. Es ist ebenfalls denkbar, anstelle von vier Monopolen 11 eine unterschiedliche Anzahl an Monopolen 11 an der Referenzspur 9 anzubringen. Die Monopole 11 der Referenzspur 9 weisen die Umfangserstreckung eines Polelements 10 der Inkrementalspur 8 auf. Die Umfangserstreckungen dieser Monopole 11 können sich allerdings voneinander unterscheiden.

Verschiedene, nicht dargestellte weitere Varianten der Encodersystem-Baugruppe 1 sind denkbar. Die Inkrementalspur 8 kann beispielsweise auf einer Oberseite und die Referenzspur 9 kann auf einer Unterseite der Scheibe 5 angeordnet sein. Auch eine Anordnung der Inkrementalspur 8 und/oder der Referenzspur 9 auf einer äußeren Mantelwand der Scheibe 5 ist möglich.

## Patentansprüche

1. Nähmaschinenantrieb mit einem magnetischen Encodersystem (2) umfassend
- eine Scheibe (5) aus magnetischem Material,
- eine Inkrementalspur (8) und
- eine Referenzspur (9),
- wobei die Scheibe (5) magnetisiert ist,
- wobei sich die Inkrementalspur (8) vollumfänglich um die Scheibe (5) erstreckt und sich abwechselnde Polelemente (10) aufweist, welche als Inkrementalmarkierungen dienen,
- wobei die Referenzspur (9) als Ringabschnitt auf der Scheibe (5) ausgeführt ist;
**dadurch gekennzeichnet, dass**
die Referenzspur (9) einen Monopol (11) aufweist, der in einem ersten Bereich eine magnetische Flussdichte B₁ aufweist, welche um mindestens einen Faktor 10 größer ist, als eine magnetische Flussdichte B₂ in mindestens einem zweiten Bereich.

2. Nähmaschinenantrieb nach Anspruch 1, **dadurch gekennzeichnet, dass** die Scheibe (5) zwischen der Inkrementalspur (8) und der Referenzspur (9) eine Vertiefung (12) aufweist.

3. Nähmaschinenantrieb nach Anspruch 1 oder 2, **dadurch gekennzeichnet, dass** der Monopol (11) im ersten Bereich eine magnetische Flussdichte B₁ aufweist, welche um mindestens einen Faktor 15 größer ist, als eine magnetische Flussdichte B₂ im mindestens einen zweiten Bereich.

4. Nähmaschinenantrieb nach Anspruch 3, **dadurch gekennzeichnet, dass** der Monopol (11) im ersten Bereich eine magnetische Flussdichte B₁ aufweist, welche um mindestens einen Faktor 20 größer ist als die magnetische Flussdichte B₂ im zweiten Bereich.

5. Nähmaschinenantrieb nach Anspruch 1 bis 4, **dadurch gekennzeichnet, dass** sich der Monopol (11) über den Umfang von mindestens einem Polelement (10) der Inkrementalspur (8) erstreckt.

6. Nähmaschinenantrieb nach Anspruch 1 bis 5, **dadurch gekennzeichnet, dass** die Referenzspur (9) in Umfangsrichtung eine Mehrzahl von Monopolen (11) aufweist.

7. Nähmaschinenantrieb nach Anspruch 1 bis 6, **dadurch gekennzeichnet, dass** die Referenzspur (9) zur Nullpunkt-Referenzierung dient.

8. Nähmaschinenantrieb nach Anspruch 1 bis 7, **gekennzeichnet durch** eine Auswerteeinheit (7) mit integriertem Mikrocontroller und einem ersten Magnetsensor, welcher die Inkrementalspur (8) erfasst.

9. Nähmaschinenantrieb nach einem der Ansprüche 1 bis 8, **gekennzeichnet durch** einen weiteren, separaten Magnetsensor zum Erfassen der Referenzspur (9).

10. Nähmaschine mit einem Nähmaschinenantrieb nach Anspruch 9.

## Claims

1. Sewing machine drive with a magnetic encoder system (2) comprising
- a disk (5) made of magnetic material,
- an incremental track (8) and
- a reference track (9),
- wherein the disk (5) is magnetized,
- wherein the incremental track (8) extends completely around the disk (5) and has alternating pole elements (10), which serve as incremental markings,
- wherein the reference track (9) is designed as a ring-shaped section on the disk (5);
**characterized in that**
the reference track (9) has a monopole (11) which, in a first area, has a magnetic flux density B₁ that is greater by at least a factor of 10 than a magnetic flux density B₂ in at least a second area.

2. Sewing machine drive according to claim 1, **characterized in that** the disk (5) has a recess (12) between the incremental track (8) and the reference track (9).

3. Sewing machine drive according to claim 1 or 2, **characterized in that** the monopole (11) has a magnetic flux density B₁ in the first area which is greater by at least a factor of 15 than a magnetic flux density B₂ in the at least one second area.

4. Sewing machine drive according to claim 3, **characterized in that** the monopole (11) in the first area has a magnetic flux density B₁ which is greater by at least a factor of 20 than the magnetic flux density B₂ in the second area.

5. Sewing machine drive according to claim 1 to 4, **characterized in that** the monopole (11) extends over the circumference of at least one pole element (10) of the incremental track (8).

6. Sewing machine drive according to claim 1 to 5, **characterized in that** the reference track (9) has a plurality of monopoles (11) in the circumferential direction.

7. Sewing machine drive according to claim 1 to 6, **characterized in that** the reference track (9) serves for zero-point referencing.

8. Sewing machine drive according to claim 1 to 7, **characterized by** an evaluation unit (7) with an integrated microcontroller and a first magnetic sensor that detects the incremental track (8).

9. Sewing machine drive according to any one of claims 1 to 8, **characterized by** an additional, separate magnetic sensor for detecting the reference track (9).

10. Sewing machine with a sewing machine drive according to claim 9.

## Revendications

1. Entraînement de machine à coudre avec un système d'encodeur magnétique (2) comprenant
- un disque (5) en matériau magnétique,
- une piste incrémentielle (8) et
- une piste de référence (9),
- dans lequel le disque (5) est magnétisé,
- dans lequel la piste incrémentielle (8) s'étend entièrement autour du disque (5) et présente des éléments polaires alternés (10) qui servent de repères incrémentiels,
- dans lequel la piste de référence (9) est réalisée sous la forme d'une section annulaire sur le disque (5) ;
**caractérisé en ce que**
la piste de référence (9) présente un monopôle (11) qui présente dans une première zone une densité de flux magnétique B₁ qui est supérieure d'au moins un facteur 10 à une densité de flux magnétique B₂ dans au moins une deuxième zone.

2. Entraînement de machine à coudre selon la revendication 1, **caractérisé en ce que** le disque (5) présente un renfoncement (12) entre la piste incrémentielle (8) et la piste de référence (9).

3. Entraînement de machine à coudre selon la revendication 1 ou 2, **caractérisé en ce que** le monopôle (11) présente dans la première zone une densité de flux magnétique B₁ qui est supérieure d'au moins un facteur 15 à une densité de flux magnétique B₂ dans au moins une deuxième zone.

4. Entraînement de machine à coudre selon la revendication 3, **caractérisé en ce que** le monopôle (11) présente dans la première zone une densité de flux magnétique B₁ qui est supérieure d'au moins un facteur 20 à la densité de flux magnétique B₂ dans la deuxième zone.

5. Entraînement de machine à coudre selon les revendications 1 à 4, **caractérisé en ce que** le monopôle (11) s'étend sur la circonférence d'au moins un élément polaire (10) de la piste incrémentielle (8).

6. Entraînement de machine à coudre selon les revendications 1 à 5, **caractérisé en ce que** la piste de référence (9) présente une pluralité de monopôles (11) dans la direction circonférentielle.

7. Entraînement de machine à coudre selon les revendications 1 à 6, **caractérisé en ce que** la piste de référence (9) sert à la référence du point zéro.

8. Entraînement de machine à coudre selon les revendications 1 à 7, **caractérisé par** une unité d'évaluation (7) avec microcontrôleur intégré et un premier capteur magnétique qui détecte la piste incrémentielle (8).

9. Entraînement de machine à coudre selon l'une quelconque des revendications 1 à 8, **caractérisé par** un autre capteur magnétique séparé pour détecter la piste de référence (9).

10. Machine à coudre avec un entraînement de machine à coudre selon la revendication 9.
